# EUROPEAN PATENT SPECIFICATION

(11) **EP 3 738 987 B1**
(45) Date of publication and mention of the grant of the patent: **10.07.2024**
(21) Application number: 19174114.9
(22) Date of filing: 13.05.2019
(51) Int. Cl.: C08F 220/36, C08F 230/08, C08G 18/00, C08G 18/62, C08G 18/67, C09D 4/00

(54) **RADIATION CURABLE POLYMERS**
STRAHLUNGSHÄRTBARE POLYMERE
POLYMÈRES DURCISSABLES PAR RAYONNEMENT

(43) Date of publication of application: 18.11.2020
(73) Proprietor: Henkel AG & Co. KGaA, 40589 Düsseldorf (DE)
(72) Inventor: LANAU, Sebastien, D-40237 Düsseldorf (DE); GUTACKER, Andrea, D-40764 Langenfeld (DE); KLEIN, Johann, D-40593 Düsseldorf (DE); MECKEL-JONAS, Claudia, D-40597 Düsseldorf (DE); DUNEKAKE, Ralf, D-40589 Düsseldorf (DE); BONIGUT, Markus, D-40724 Hilden (DE)
(74) Representative: Viering, Jentschura & Partner mbB Patent- und Rechtsanwälte

(56) References cited:
- EP-A1- 1 767 553
- WO-A1-2006/117156
- US-A- 3 700 643
- US-A1- 2013 274 414
- US-A1- 2017 009 010
- US-A1- 2018 094 100

## Description

The present invention according to the appended claims relates to radiation or radiation/moisture dual curable polymers and methods for their manufacture.

Radiation curable adhesives are widely used and can form crosslinks (cure) upon sufficient exposure to radiation such as electron beam radiation or actinic radiation such as ultraviolet (UV) radiation or visible light. It would be desirable to provide radiation curable polymers that allow to obtain cured materials that show elastomeric properties and have high temperature resistance.

Also known and widely used in the field of adhesives and sealants are one-component, moisture-curing adhesives and sealants, in particular so-called silane-terminated adhesives and sealants. For many years, these have played an important role in numerous technical applications. Silane-terminated adhesives and sealants have the advantage that they provide for a broad range of adhesion to a wide variety of substrates without any surface pretreatment using primers. Silane-modified polymer compositions provide for a variety of interesting properties, such as being isotropic and chemically curable to provide elastomers, to not deform under elevated temperatures - in contrast to hotmelts - and can be combined with a variety of additives to tune the properties of the obtained product, such as mechanical properties, fire resistance, thermal conductivity, electrical conductivity, heat resistance, UV resistance, weather resistance.

EP 1 767 553 A1, WO 2006/117156 A1, US 3 700 643 A, US 2018/094100 A1, US 2017/009010 A1 and US 2013/274414 A1 describe various curable polymers presenting different terminal groups.

The present invention provides a novel type of polymers that are curable by a combination of radiation and moisture.

In a first aspect, the present invention relates to a radiation/moisture dual curable polymer as defined in appended claims 1 to 7.

In another aspect, the invention relates to a method for producing a radiation/moisture curable polymer as described herein and as defined in appended claims 8 and 9.

This method is herein also referred to as "1-step method".

In another aspect, the invention relates to a method for producing a radiation/moisture curable polymer as described herein and as defined in appended claims 10 and 11.

This method is herein also referred to as "2-step method".

A "composition" is understood in the context of the present invention as a mixture of at least two ingredients.

The term "curable" is to be understood to mean that, under the influence of external conditions, in particular under the influence of radiation and moisture present in the environment and/or supplied for the purpose, the composition can pass from a relatively flexible state, optionally possessing plastic ductility, to a harder state. In general, the crosslinking can take place by means of chemical and/or physical influences, for example, by the supply of energy in the form of heat, light or other electromagnetic radiation, but also by simply bringing the composition into contact with air, atmospheric moisture, water, or a reactive component. In the context of the present invention, "curable" predominantly relates to the property of the terminal groups of formula (I) to crosslink and of the terminal groups of formula (II) to condensate. "Radiation curable", as used herein, thus relates to curing under the influence, e.g. exposure, to radiation, such as electromagnetic radiation, in particular UV radiation or visible light. UV radiation is in the range of 100 to 400 nanometers (nm). Visible light is in the range of 400 to 780 nanometers (nm). "Moisture-curable", as used herein, thus relates to curing under the influence of moisture, typically humidity from the surrounding air.

Provided reference is made to molecular weights of oligomers or polymers in the present application, the quantities, unless otherwise stated, refer to the number average, i.e., the Mₙ value, and not to the weight average molecular weight.

"At least one," as used herein, refers to 1 or more, i.e., 1, 2, 3, 4, 5, 6, 7, 8, 9, or more. In regard to an ingredient, the term relates to the type of ingredient and not to the absolute number of molecules. "At least one polymer" thus means, for example, at least one type of polymer, i.e., that a type of polymer or a mixture of a number of different polymers can be used. Together with weight data, the term refers to all compounds of the given type, contained in a composition/mixture, i.e., that the composition contains no other compounds of this type beyond the given amount of the relevant compounds.

All percentage data, provided in connection with the compositions described herein, refer to % by weight, based in each case on the relevant mixture, unless explicitly indicated otherwise.

"Consisting essentially of", as used herein, means that the respective composition is composed mainly, i.e. by at least 50% by weight, for example at least 60, 70 or 80 %, of the referenced component(s), as described below.

"Alkyl," as used herein, refers to a saturated aliphatic hydrocarbon including straight-chain and branched-chain groups. The alkyl group preferably has 1 to 10 carbon atoms (if a numerical range, e.g., "1-10" is given herein, this means that this group, in this case the alkyl group, can have 1 carbon atom, 2 carbon atoms, 3 carbon atoms, etc., up to and including 10 carbon atoms). In particular, the alkyl can be an intermediate alkyl, which has 5 to 6 carbon atoms, or a lower alkyl, which has 1 to 4 carbon atoms, e.g., methyl, ethyl, n-propyl, isopropyl, butyl, isobutyl, tert-butyl, etc. The alkyl groups can be substituted or unsubstituted. "Substituted," as used in this connection, means that one or more carbon atoms and/or hydrogen atom(s) of the alkyl group are replaced by heteroatoms or functional groups. Functional groups that can replace the hydrogen atoms are selected particularly from =O, =S, -O-(C₁₋₁₀ alkyl), -O-(C₆₋₁₄ aryl), -N(C₁₋₁₀ alkyl)₂, such as -N(CH₃)₂, -F, -Cl, -Br, -I, C₃₋₈ cycloalkyl, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms are independently nitrogen, oxygen, or sulfur. Substituted alkyl includes, for example, alkylaryl groups. Heteroalkyl groups in which 1 or more carbon atoms are replaced by heteroatoms, particularly selected from O, S, N, and Si, are obtained by the replacement of one or more carbon atoms by heteroatoms. Examples of such heteroalkyl groups are, without limitation, methoxymethyl, ethoxyethyl, propoxypropyl, methoxyethyl, isopentoxypropyl, trimethoxypropylsilyl, etc. In various embodiments, substituted alkyl includes C₁₋₁₀ alkyl, preferably C₁₋₄ alkyl, such as propyl, substituted with aryl, alkoxy or oxyaryl. "Alkylene", as used herein, relates to the corresponding divalent alkyl group, i.e. alkanediyl.

"Alkenyl," as used herein, refers to an alkyl group, as defined herein, which consists of at least two carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be substituted or unsubstituted. If they are substituted, the substituents are as defined above for alkyl. "Alkenyloxy" refers to an alkenyl group, as defined herein, that is linked via an -O- to the rest of the molecule. The respective term thus includes enoxy groups, such as vinyloxy (H₂C=CH-O-). "Alkenylene", as used herein, relates to the corresponding divalent alkenyl group.

"Alkynyl," as used herein, refers to an alkyl group, as defined herein, which consists of at least two carbon atoms and at least one carbon-carbon triple bond, e.g., ethynyl (acetylene), propynyl, butynyl, or petynyl and structural isomers thereof as described above. Alkynyl groups can be substituted or unsubstituted. If they are substituted, the substituents are as defined above for alkyl. "Alkylnyloxy" refers to an alkynyl group, as defined herein, that is linked via an -O- to the rest of the molecule. "Alkynylene", as used herein, relates to the corresponding divalent alkynyl group.

A "cycloaliphatic group" or "cycloalkyl group," as used herein, refers to monocyclic or polycyclic groups (a number of rings with carbon atoms in common), particularly of 3-8 carbon atoms, in which the ring does not have a completely conjugated pi-electron system, e.g., cyclopropyl, cyclobutyl, cyclopentyl, cyclohexyl, cyclobutenyl, cyclopentenyl, cyclohexenyl, etc. Cycloalkyl groups can be substituted or unsubstituted. "Substituted," as used in this regard, means that one or more hydrogen atoms of the cycloalkyl group are replaced by functional groups. Functional groups that can replace the hydrogen atoms are selected particularly from =O, =S, -O-(C₁₋₁₀ alkyl), -O-(C₆₋₁₄ aryl), -N(C₁₋₁₀ alkyl)₂, such as - N(CH₃)₂, -F, -Cl, -Br, -I, -COOH, -CONH₂, -C₁₋₁₀ alkyl or alkoxy, C₂₋₁₀ alkenyl, C₂₋₁₀ alkynyl, C₃₋₈ cycloalkyl, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms independently are nitrogen, oxygen, or sulfur. "Cycloalkyloxy" refers to a cycloalkyl group, as defined herein, that is linked via an -O- to the rest of the molecule. "Cycloalkylene", as used herein, relates to the corresponding divalent cycloalkyl group.

"Aryl," as used herein, refers to monocyclic or polycyclic groups (i.e., rings that have neighboring carbon atoms in common), particularly of 6 to 14 carbon ring atoms which have a completely conjugated pi-electron system. Examples of aryl groups are phenyl, naphthalenyl, and anthracenyl. Aryl groups can be substituted or unsubstituted. If they are substituted, the substituents are as defined above for cycloalkyl. "Aryloxy" refers to an aryl group, as defined herein, that is linked via an -O- to the rest of the molecule. "Arylene", as used herein, relates to the corresponding divalent aryl group.

A "heteroaryl" group, as used herein, refers to a monocyclic or polycyclic (i.e., rings that share an adjacent ring atom pair) aromatic ring, having particularly 5 to 10 ring atoms, where one, two, three, or four ring atoms are nitrogen, oxygen, or sulfur and the rest is carbon. Examples of heteroaryl groups are pyridyl, pyrrolyl, furyl, thienyl, imidazolyl, oxazolyl, isoxazolyl, thiazolyl, isothiazolyl, pyrazolyl, 1,2,3-triazolyl, 1,2,4-triazolyl, 1,2,3-oxadiazolyl, 1,2,4-oxadiazolyl, 1,2,5-oxadiazolyl, 1,3,4-oxadiazolyl, 1,3,4-triazinyl, 1,2,3-triazinyl, benzofuryl, isobenzofuryl, benzothienyl, benzotriazolyl, isobenzothienyl, indolyl, isoindolyl, 3H-indolyl, benzimidazolyl, benzothiazolyl, benzoxazolyl, quinolizinyl, quinazolinyl, phthalazinyl, quinoxalinyl, cinnolinyl, naphthyridinyl, quinolyl, isoquinolyl, tetrazolyl, 5,6,7,8-tetrahydroquinolyl, 5,6,7,8-tetrahydroisoquinolyl, purinyl, pteridinyl, pyridinyl, pyrimidinyl, carbazolyl, xanthenyl, or benzoquinolyl. Heteroaryl groups can be substituted or unsubstituted. If they are substituted, the substituents are as defined above for cycloalkyl. "(Hetero)aryl", as used herein, refers to both aryl and heteroaryl groups as defined herein. "Heteroaryloxy" refers to a heteroaryl group, as defined herein, that is linked via an -O- to the rest of the molecule.

A "heteroalicyclic group" or a "heterocycloalkyl group," as used herein, refers to a monocyclic or fused ring having 5 to 10 ring atoms, which contains one, two, or three heteroatoms, selected from N, O, and S, whereby the rest of the ring atoms are carbon. A "heterocycloalkenyl" group contains in addition one or more double bonds. The ring however has no completely conjugated pi-electron system. Examples of heteroalicyclic groups are pyrrolidinone, piperidine, piperazine, morpholine, imidazolidine, tetrahydropyridazine, tetrahydrofuran, thiomorpholine, tetrahydropyridine, and the like. Heterocycloalkyl groups can be substituted or unsubstituted. If they are substituted, the substituents are as defined above for cycloalkyl. "Heteroalicyclic" refers to a heteroalicyclic group, as defined herein, that is linked via an -O- to the rest of the molecule.

"Substituted" in relation to hydrocarbon moieties, as used herein, has the meaning provided above depending on the type of the hydrocarbon moiety. Accordingly, the hydrocarbon moiety may be an alkyl, alkenyl, alkynyl, cycloaliphatic or aryl group, as defined above, or the bivalent or polyvalent variants thereof, that may be substituted or unsubstituted, as defined above.

The polymer having the at least one terminal group of the general formula (I) is, in the present invention, a polymer having a polyoxyethylene backbone, or polyoxyethylene-polyoxypropylene backbone.

A "polyol" is understood to be a compound which contains at least two OH groups, irrespective of whether the compound contains other functional groups. However, a polyol used in accordance with the present invention for the preparation of the inventive polymers preferably contains only OH groups as functional groups or, if other functional groups are present, none of these other functional groups are reactive at least to isocyanates under the conditions prevailing during the reactions of the polyol(s) and polyisocyanate(s) described herein.

The polyols suitable are preferably polyether polyols.

The polyether polyol is preferably a polyalkylene oxide, particularly preferably polyethylene oxide and/or polypropylene oxide.

The polyols have an OH value of preferably about 5 to about 15 and, more preferably, of about 10. The percentage content of primary OH groups should be below about 20%, based on all the OH groups, and is preferably below 15%. The acid value of the polyethers used is below about 0.1, preferably below 0.05 and, more preferably, below 0.02.

Besides the polyethers, the polyol mixture may contain other polyols. For example, it may contain polyester polyols with a molecular weight of at least about 500 to about 50,000.

Generally, while all the polymers described above can have multiple reactive termini that are used for the attachment of the terminal groups described herein, such as multiple hydroxyl groups, thus being polyols, it may be preferable that they comprise two or three such reactive terminal groups for attachment of the terminal groups of formulae (I) and (II), preferably only two, thus being linear polymers. Particularly preferred are di-functional and tri-functional polymers, such as diols and/or triols, more preferred are di-functional polymers, such as diols, optionally in combination with tri-functional polymers, such as triols. If tri-functional polymers, such as triols, are used, these are preferably used in combination with di-functional polymers, such as diols, for example in a 1:1 molar ratio, more preferably in a 1:>1 molar ratio. Accordingly, the polymers used are diols or diol/triol combinations with the given ratios.

It is generally preferred that if the polymers described herein, include polyfunctional polymers, i.e. polymers having more than two reactive terminal groups, then these are present only in combination with polymers having a maximum of two reactive terminal groups. In such mixtures of polymers, the amount of difunctional polymers is preferably at least 50 mol-%, while the amount of tri- or higher functional polymers is preferably less than 50 mol-%, more preferably less than 45 mol-% or less than 40 mol-% or less than 35 mol-% or less than 30 mol-% or less than 25 mol-% or even less than 20 mol-%. Higher amounts of polyfunctional polymers may lead to an undesired degree of crosslinking already at the stage of generating the polymers of the invention.

The radiation/moisture dual curable polymer of the present invention comprises at least one terminal group of the general formula (I) -A¹-C(=O)-CR¹=CH₂ (I),
wherein A¹ is a divalent bonding group containing at least one heteroatom; and R¹ is selected from H and C₁-C₄ alkyl, preferably H and methyl; , wherein the polymer has a polyoxyethylene backbone or a polyoxyethylene-polyoxypropylenebackbone,
wherein A is a group of formula (III) -R¹¹-A¹¹-(R¹²-A¹²)ₙ-R¹³- (III) wherein R , R , and R are independently a bond or a divalent substituted or unsubstituted hydrocarbon residue with 1 to 20 carbon atoms, preferably a substituted or unsubstituted (cyclo)alkylene or arylene residue with 1 to 14 carbon atoms; 11 12
A and A are each independently a divalent group selected from -O-C(=O)-NH-, -NH-C(=O)O, -NH-C(=O)-NH-, -NR"-C(=O)-NH-, -NH-C(=O)-NR"-, -NH-C(=O)-, -C(=O)-NH -, -C(=O)-O-, O-C(=O)-, -O-C(=O)-O-, -S-C(=O)-NH-, -NH-C(=O)-S-, -C(=O)-S-, -S-C(=O)-, -S-C(=O)-S-, C(=O)-, -S-, -O-, and -NR"-, wherein R" can be hydrogen or a hydrocarbon moiety with 1 to 12carbon atoms, optionally substituted, preferably C1-C2 alkyl or hydrogen; and n is 0 or 1,
wherein said polymer comprises at least one terminal group of the general formula (II) -A²-SiXYZ (II),
wherein X, Y, Z are, independently of one another, selected from the group consisting of a hydroxyl group and C₁ to C₈ alkyl, C₁ to C₈ alkoxy, and C₁ to C₈ acyloxy groups, wherein X, Y, Z are substituents directly bound with the Si atom or the two of the substituents X, Y, Z form a ring together with the Si atom to which they are bound, and at least one of the substituents X, Y, Z is selected from the group consisting of a hydroxyl group, C₁ to C₈ alkoxy and C₁ to C₈ acyloxy groups; and A² is a divalent bonding group containing at least one heteroatom.

In various embodiments, the curable polymer may comprise at least two, for example 2 or 3 or 4 or more terminal groups of the general formula (I).

In the present invention it is advantageous that both types of terminal groups are present, as this imparts dual curing properties to the polymer. This is advantageous, as the radiation curing provides a fast curing mechanism and the moisture curing provides for a slower curing mechanism. While it is possible to indicate the number of terminal groups of each formula for a single polymer molecule, it is understood that, depending on the process of manufacture, the obtained population of polymers may vary in their structure with regard to the terminal groups, as it may be possible that such a process generates polymer molecules that have only terminal groups of formula (I), polymer molecules that have only terminal groups of formula (II) and polymer molecules that have both types of terminal groups.

In various embodiments, the divalent linking group A¹ and/or A² comprises a substituted or unsubstituted ether, amide, carbamate, urethane, urea, imino, siloxane, carboxylate, carbamoyl, amidino, carbonate, sulfonate or sulfinate group, preferably a urea and/or urethane group. "Substituted" in relation to these groups means that a hydrogen atom present in these groups may be replaced by a non-hydrogen moiety, such as alkyl, for example C₁₋₄ alkyl. While A¹ and/or A² may be any one of the listed groups, in various embodiments, they comprise further structural elements, such as further linking groups that link the listed functional group to the polymer and/or the terminal group.

Generally, the linking groups A¹ and A² are generated in a capping reaction in which the polymer termini are reacted with a compound results in the terminal groups of formulae (I) and (II). The polymers are provided in a hydroxyl (OH) terminated form and thus provide reactive groups on their termini that can be used for the capping reaction. The terminal groups of the polymer backbone, such as hydroxyl groups, may be first functionalized with a polyisocyanate, such as a diisocyanate or triisocyanate, such as those described below, such that an NCO-terminated polymer is generated. This may then in the next step be reacted with a (meth)acrylate/silane that comprises an NCO-reactive group, such as an amino or hydroxyl group, preferably a hydroxy-modified (meth)acrylate and/or an aminosilane. The urethane and urea groups resulting from such a reaction, advantageously increase the strength of the polymer chains and of the overall crosslinked polymer.

"Polyisocyanate", as used herein, is understood to be a compound which has at least two isocyanate groups -NCO. This compound does not have to be a polymer, and instead is frequently a low molecular compound.

The polyisocyanates suitable include ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3- and -1,4-diisocyanate, bis(2-isocyanatoethyl)fumarate, 1-isocyanato-3,3,5-trimethyl-5-isocyanatomethylcyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), and the isomeric mixtures thereof. Also suitable are partially or completely hydrogenated cycloalkyl derivatives of MDI, for example completely hydrogenated MDI (H₁₂-MDI), alkyl-substituted diphenylmethane diisocyanates, for example mono-, di-, tri-, or tetraalkyldiphenylmethane diisocyanate and the partially or completely hydrogenated cycloalkyl derivatives thereof, 4,4'-diisocyanatophenylperfluorethane, phthalic acid-bis-isocyanatoethyl ester, 1 chloromethylphenyl-2,4- or -2,6-diisocyanate, 1-bromomethylphenyl-2,4- or -2,6-diisocyanate, 3,3'-bis-chloromethyl ether-4,4'-diphenyl diisocyanate, sulfur-containing diisocyanates such as those obtainable by reacting 2 moles diisocyanate with 1 mole thiodiglycol or dihydroxydihexyl sulfide, diisocyanates of dimer fatty acids, or mixtures of two or more of the named diisocyanates. The polyisocyanate is preferably IPDI, TDI or MDI.

Other polyisocyanates suitable for use are isocyanates with a functionality of three or more obtainable, for example, by oligomerization of diisocyanates, more particularly by oligomerization of the isocyanates mentioned above. Examples of such tri- and higher isocyanates are the triisocyanurates of HDI or IPDI or mixtures thereof or mixed triisocyanurates thereof and polyphenyl methylene polyisocyanate obtainable by phosgenation of aniline/formaldehyde condensates.

Accordingly, in the present invention, A¹ is a group of formula (III)

-R¹¹-A¹¹-(R¹²-A¹²)ₙ-R¹³- (III)

wherein
R¹¹, R¹², and R¹³ are independently a bond or a divalent substituted or unsubstituted hydrocarbon residue with 1 to 20 carbon atoms, preferably a substituted or unsubstituted (cyclo)alkylene or arylene residue with 1 to 14 carbon atoms;
A¹¹ and A¹² are each independently a divalent group selected from -O-C(=O)-NH-, -NH-C(=O)O- , -NH-C(=O)-NH-, -NR"-C(=O)-NH- , -NH-C(=O)-NR"- , -NH-C(=O)-, -C(=O)-NH - , -C(=O)-O-, -O-C(=O)-, -O-C(=O)-O-, -S-C(=O)-NH- , -NH-C(=O)-S- , -C(=O)-S-, -S-C(=O)-, -S-C(=O)-S- , -C(=O)-, -S-, -O-, and - NR"-, wherein R" can be hydrogen or a hydrocarbon moiety with 1 to 12 carbon atoms, optionally substituted, preferably alkyl or hydrogen; and
n is 0 or 1.

"(Cyclo)alkylene", as used herein, means a cycloalkylene or alkylene group.

Being a "bond" means that the respective moiety is essentially absent, i.e. that the remaining structural elements are directly linked to the next structural element. For example, R¹¹ being a bond means that the structural element A¹¹ is directly bound to the polymer backbone, while R¹³ being a bond and n being 0 means that A¹¹ is directly bound to the remaining part of the terminal group of formula (I), i.e. -C(=O)-CR¹=CH₂.

"Substituted" in relation to the (cyclo)alkylene or arylene groups has the same meaning as disclosed above in relation to alkyl, cycloalkyl and aryl groups. In some embodiments, in particular if R¹³ is concerned, it also encompasses that the substituent is or comprises another group of the formula -C(=O)-CR¹=CH₂. It is however preferred that each group of formula (I) does contain only 1 or 2 groups of the structure -C(=O)-CR¹=CH₂, preferably only 1. In some embodiments, in particular if R¹² is concerned, it also encompasses that the substituent is or comprises another group of the formula -A¹²-R¹³- with this R¹³ also being linked to a group of formula (I). These structures may, for example, be generated if a triisocyanate is used.

If n=0, this means that A¹² and R¹² are absent and A¹¹ is directly linked to R¹³.

In any case, the orientation of the structural element of formula (III) is such that R¹³ links to the structural element -C(=O)-CR¹=CH₂ of the group of formula (I), or if not present, A¹² or A¹¹.

In various embodiments,
R¹¹ is a bond or a divalent substituted or unsubstituted hydrocarbon residue with 1 to 20 carbon atoms, preferably an unsubstituted alkylene residue with 1 to 4 carbon atoms, for example methylene, 1,2-ethylene, 1,3-propylene or 1,4-butylene;
A¹¹ is a divalent group selected from -O-C(=O)-NH-, -NH-C(=O)-NH-, and -NR"-C(=O)-NH- , preferably -O-C(=O)-NH-;
R¹³ is a bond or a divalent substituted or unsubstituted hydrocarbon residue with 1 to 20 carbon atoms, preferably a substituted or unsubstituted alkylene residue with 1 to 8 carbon atoms, such as ethylene (-CH₂-CH₂-), propylene or butylene;
n is 0 or 1.

If, in the above embodiments, n is 1,
R¹² may be a divalent substituted or unsubstituted hydrocarbon residue with 1 to 20 carbon atoms, preferably a substituted or unsubstituted (cyclo)alkylene residue or arylene residue with 1 to 14 carbon atoms; and
A¹² may be a divalent group selected from -NH-C(=O)-O-, -NH-C(=O)-NH-, and -NH-C(=O)-NR"-, preferably --NH-C(=O)-O-.

The structural element of formula (III) arises from the reaction of a diisocyanate with a hydroxyl-terminated polymer and, in a second step, the resulting NCO-terminated polymer with a hydroxyl group containing (meth)acrylate. R¹¹ may be a bond or alkylene, A¹¹ is -O-C(=O)-NH-, R¹² is the NCO-bearing residue of the diisocyanate, A¹² is -NH-C(=O)-O- and R¹³ is the remaining structural element of the hydroxy-modified (meth)acrylate ester part. R¹² may be a divalent (1,3,3-trimethylcyclohexyl)methylene group (if IPDI is used as the diisocyanate), 1-methyl-2,4-phenylene (if TDI is used as the diisocyanate) and any other divalent group remaining if any one of the diisocyanates disclosed herein is used. R¹³ is the remainder of the hydroxyester group of the (meth)acrylate used, for example ethyl, if 2-hydroxyethyl(meth)acrylate was used, or n-butyl, if 4-hydroxybutyl(meth)acrylate was used, or 3-(phenoxy)-2-propyl, if 2-hydroxy-3-phenoxy(meth)acrylate was used.

Preferred diisocyanates used include IPDI, so that R¹² is 1,3,3-trimethylcyclohexyl)methylene-4-yl.

The (meth)acrylates used include, without limitation, 2-hydroxyethylacrylate and -methacrylate, 3-hydroxypropylmethacrylate, 4-hydroxybutylacrylate, and 2-hydroxy-3-phenoxyacrylate, so that R¹³ is preferably ethyl, propyl, butyl or 3-(phenoxy)-2-propyl.

Alternatively, other (meth)acrylates may be used, for example those that comprise a reactive group for coupling, such as hydroxyl group, and are based on monofunctional (meth)acrylate monomers including, by way of example only and not limitation: isooctyl (meth)acrylate; tetrahydrofuranyl (meth)acrylate; cyclohexyl (meth)acrylate; dicyclopentanyl (meth)acrylate; dicyclopentanyloxy ethyl (meth)acrylate; N,N-diethylaminoethyl (meth)acrylate; 2-ethoxyethyl (meth)acrylate; caprolactone modified (meth)acrylate; isobornyl (meth)acrylate; lauryl (meth)acrylate; acryloylmorpholine; N-vinylcaprolactam; nonylphenoxypolyethylene glycol (meth)acrylate; nonylphenoxypolypropylene glycol (meth)acrylate; phenoxy ethyl (meth)acrylate; phenoxy di(ethylene glycol) (meth)acrylate; and tetrahydrofuranyl (meth)acrylate. Suitable multifunctional (meth)acrylate monomer can include, by way of example and not limitation: 1,4-butylene glycol di(meth)acrylate; dicyclopentanyl di(meth)acrylate; ethylene glycol di(meth)acrylate; dipentaerythritol hexa(meth)acrylate; caprolactone modified dipentaerythritol hexa(meth)acrylate; 1,6-hexanediol di(meth)acrylate; neopentyl glycol di(meth)acrylate; polyethylene glycol di(meth)acrylate; tetraethylene glycol di(meth)acrylate; trimethylolpropane tri(meth)acrylate; tris(acryloyloxyethyl) isocyanurate; caprolactone modified tris(acryloyloxyethyl) isocyanurate; tris(methylacryloyloxyethyl) isocyanurate and tricyclodecane dimethanol di(meth)acrylate. The monofunctional (meth)acrylate monomers and multifunctional (meth)acrylate monomers may be used individually or in a combination of two or more monomers, respectively, or the monofunctional (meth)acrylate monomer and multifunctional (meth)acrylate monomer can be combined together.

In other embodiments, n is 0. R¹¹ can be a bond, A¹¹ is -O-C(=O)-NH- and R¹³ is typically an alkylene moiety, such a methylene, ethylene or propylene. The linking group results from the reaction of an isocyanatoacrylate with an hydroxy-terminated polymer.

Various (meth)acrylates may be used to provide for the group of formula (I), for example those that are based on monofunctional (meth)acrylate monomers including, by way of example only and not limitation: butylene glycol mono(meth)acrylate; hydroxyethyl (meth)acrylate; hydroxylpropyl (meth)acrylate; hydroxybutyl(meth)acrylate; isooctyl (meth)acrylate; tetrahydrofuranyl (meth)acrylate; cyclohexyl (meth)acrylate; dicyclopentanyl (meth)acrylate; dicyclopentanyloxy ethyl (meth)acrylate; N,N-diethylaminoethyl (meth)acrylate; 2-ethoxyethyl (meth)acrylate; 2-hydroxyethyl (meth)acrylate; 2-hydroxypropyl (meth)acrylate; caprolactone modified (meth)acrylate; isobornyl (meth)acrylate; lauryl (meth)acrylate; acryloylmorpholine; N-vinylcaprolactam; nonylphenoxypolyethylene glycol (meth)acrylate; nonylphenoxypolypropylene glycol (meth)acrylate; phenoxy ethyl (meth)acrylate; phenoxy hydropropyl (meth)acrylate; phenoxy di(ethylene glycol) (meth)acrylate; polyethylene glycol (meth)acrylate and tetrahydrofuranyl (meth)acrylate. The suitable multifunctional (meth)acrylate monomer can include, by way of example and not limitation: 1,4-butylene glycol di(meth)acrylate; dicyclopentanyl di(meth)acrylate; ethylene glycol di(meth)acrylate; dipentaerythritol hexa(meth)acrylate; caprolactone modified dipentaerythritol hexa(meth)acrylate; 1,6-hexanediol di(meth)acrylate; neopentyl glycol di(meth)acrylate; pentaerythritol tri(meth)acrylate; polyethylene glycol di(meth)acrylate; tetraethylene glycol di(meth)acrylate; trimethylolpropane tri(meth)acrylate; tris(acryloyloxyethyl) isocyanurate; caprolactone modified tris(acryloyloxyethyl) isocyanurate; tris(methylacryloyloxyethyl) isocyanurate and tricyclodecane dimethanol di(meth)acrylate. The monofunctional (meth)acrylate monomers and multifunctional (meth)acrylate monomers may be used individually or in a combination of two or more monomers, respectively, or the monofunctional (meth)acrylate monomer and multifunctional (meth)acrylate monomer can be combined together. It is understood that all the above (meth)acrylates may need to be used in form of derivatives thereof that comprise an additional linking group that allows coupling to the polymer backbone, such as a hydroxyl or isocyanate or amine group, if not already present. Specific modified acrylates that may be used include, but are not limited to, isocyanato alkyl (meth)acrylates such as 2-isocyanatoethyl acrylate, 2-isocyanatoethyl methacrylate, 3-isocyanatopropyl (meth)acrylate, 2-isocyanatopropyl (meth)acrylate, 4-isocyanatobutyl (meth)acrylate, 3-isocyanatobutyl (meth)acrylate, and 2-isocyanatobutyl (meth)acrylate.

In various embodiments, A² is a group of formula (IV)

-R²¹-A²¹-(R²²-A²²)ₘ-R²³- (IV)

wherein
R²¹, R²², and R²³ are independently a bond or a divalent substituted or unsubstituted hydrocarbon residue with 1 to 20 carbon atoms, preferably a substituted or unsubstituted (cyclo)alkylene or arylene residue with 1 to 14 carbon atoms;
A²¹ and A²² are each independently a divalent group selected from -O-C(=O)-NH-, -NH-C(=O)O- , -NH-C(=O)-NH-, -NR"-C(=O)-NH- , -NH-C(=O)-NR"- , -NH-C(=O)-, -C(=O)-NH - , -C(=O)-O-, -O-C(=O)-, -O-C(=O)-O-, -S-C(=O)-NH- , -NH-C(=O)-S- , -C(=O)-S-, -S-C(=O)-, -S-C(=O)-S- , -C(=O)-, -S-, -O-, and -
NR"-, wherein R" can be hydrogen or a hydrocarbon moiety with 1 to 12 carbon atoms, optionally substituted, preferably alkyl or hydrogen; and
m is 0 or 1.

Here, the same definitions for "bond" and "substituted", as disclosed above for formula (III), apply, with the only difference being that "substituted" also encompasses that the substituent, in particular of R²³, is another group of the formula -SiXYZ instead of -C(=O)-CR'=CHz. Again, in various embodiments, it is also encompassed that R²² is substituted with another -A²²-R²³ moiety, with said R²³ being linked to another group of formula (II).

If n=0, this means that A²² and R²² are absent and A²¹ is directly linked to R²³.

In any case, the orientation of the structural element of formula (IV) is such that R²³ links to the structural element -SiXYZ of the group of formula (II), or if not present, A²² or A²¹.

In various embodiments,
R²¹ is a bond or a divalent substituted or unsubstituted hydrocarbon residue with 1 to 20 carbon atoms, preferably an unsubstituted alkylene residue with 1 to 4 carbon atoms, for example methylene, ethylene, propylene, preferably a bond;
R²³ is a bond or a divalent substituted or unsubstituted hydrocarbon residue with 1 to 20 carbon atoms, preferably an unsubstituted alkylene residue with 1 to 3 carbon atoms, more preferably methylene or propylene;
n is 0 or 1, wherein if n is 0,
A²¹ is a divalent group selected from -O-, -O-C(=O)-NH-, -NH-C(=O)-NH-, and -NR"-C(=O)-NH- , preferably -O-, -O-C(=O)-NH-, or NH-C(=O)-NH-; and
wherein if n is 1,
A²¹ is a divalent group selected from -O-, -O-C(=O)-NH-, -NH-C(=O)-NH-, and -NR"-C(=O)-NH- , preferably -O-C(=O)-NH;
R²² is a divalent substituted or unsubstituted hydrocarbon residue with 1 to 20 carbon atoms, preferably a substituted or unsubstituted (cyclo)alkylene residue or arylene residue with 1 to 14 carbon atoms; and
A²² is a divalent group selected from -NH-C(=O)O-, -NH-C(=O)-NH-, and -NH-C(=O)-NR"-, preferably - NH-C(=O)-NH.

Such linking groups arise from the reaction of a hydroxy-terminated polymer with a diisocyanate, as defined above for the (meth)acrylate terminal groups, and the subsequent reaction of the NCO-terminated polymer with an NCO-reactive silane, such as an hydroxysilane or, preferably an aminosilane. Suitable aminosilanes are well known in the art and include, without limitation, 3-aminopropyltrimethoxysilane as well as those disclosed below in relation to the inventive methods. Further useful isocyanate containing alkoxy silanes to impart moisture curing include 3-isocyanato propyl trimethoxysilane, 3-isocyanato propyl triethoxysilane, and 3-isocyanato propyl methyl dimethoxysilane.

In various embodiments, R¹¹, R²¹ and R²³ in the general formulae (III) and/or (IV) are selected from a bond, methylene, ethylene, or n-propylene group. R¹¹ and R²¹ are preferably a bond. R²³ is preferably 1,3-propylene.

Alkoxysilane-terminated compounds having a methylene group as binding link to the polymer backbone - so-called "alpha-silanes" - have a particularly high reactivity of the terminating silyl group, leading to reduced setting times and thus to very rapid curing of formulations based on these polymers.

In general, a lengthening of the binding hydrocarbon chain leads to reduced reactivity of the polymers.

In particular, "gamma-silanes" - which comprise the unbranched propylene residue as binding link - have a balanced ratio between necessary reactivity (acceptable curing times) and delayed curing (open assembly time, possibility of corrections after bonding). By carefully combining alpha- and gamma-alkoxysilane-terminated building blocks, therefore, the curing rate of the systems can be influenced as desired.

The substituents X, Y and Z are, independently of one another, selected from the group consisting of a hydroxyl group and C₁ to C₈ alkyl, C₁ to C₈ alkoxy, and C₁ to C₈ acyloxy groups, wherein at least one of the substituents X, Y, Z here must be a hydrolyzable group, preferably a C₁ to C₈ alkoxy or a C₁ to C₈ acyloxy group, wherein the substituents X, Y and Z are directly bound with the Si atom or the two of the substituents X, Y, Z form a ring together with the Si atom to which they are bound. In preferred embodiments, X, Y and Z are the substituents directly bound with the SI atom. As hydrolyzable groups, preferably alkoxy groups, in particular methoxy, ethoxy, i-propyloxy and i-butyloxy groups, are selected. This is advantageous, since no substances which irritate mucous membranes are released during the curing of compositions comprising alkoxy groups. The alcohols formed by hydrolysis of the residues are harmless in the quantities released, and evaporate. However, acyloxy groups, such as an acetoxy group -O-CO-CHs, can also be used as hydrolyzable groups.

In the present invention, the polymer(s) has/have at least one terminal groups of the general formula (II). Each polymer chain thus comprises at least one linking point at which the condensation of the polymers can be completed, splitting off the hydrolyzed residues in the presence of atmospheric moisture. In this way, regular and rapid crosslinkability is achieved so that bonds with good strengths can be obtained. In addition, by means of the quantity and the structure of the hydrolyzable groups - for example by using di- or trialkoxysilyl groups, methoxy groups or longer residues - the configuration of the network that can be achieved as a long-chain system (thermoplastics), relatively wide-mesh three-dimensional network (elastomers) or highly crosslinked system (thermosets) can be controlled, so that *inter alia* the elasticity, flexibility and heat resistance of the finished crosslinked compositions can be influenced in this way.

In the general formula (II), X may be preferably an alkyl group and Y and Z are, each independently of one another, an alkoxy group, or X, Y and Z are, each independently of one another, an alkoxy group. In general, polymers comprising di- or trialkoxysilyl groups have highly reactive linking points which permit rapid curing, high degrees of crosslinking and thus good final strengths. The particular advantage of dialkoxysilyl groups lies in the fact that, after curing, the corresponding compositions are more elastic, softer and more flexible than systems comprising trialkoxysilyl groups.

With trialkoxysilyl groups, on the other hand, a higher degree of crosslinking can be achieved, which is particularly advantageous if a harder, stronger material is desired after curing. In addition, trialkoxysilyl groups are more reactive and therefore crosslink more rapidly, thus reducing the quantity of catalyst required, and they have advantages in "cold flow" - the dimensional stability of a corresponding adhesive under the influence of force and possibly temperature.

Particularly preferably, the substituents X, Y and Z in the general formula (II) are, each independently of one another, selected from a hydroxyl, a methyl, an ethyl, a methoxy or an ethoxy group, at least one of the substituents being a hydroxyl group, or a methoxy or an ethoxy group, preferably a methoxy group. Methoxy and ethoxy groups as comparatively small hydrolyzable groups with low steric bulk are very reactive and thus permit a rapid cure, even with low use of catalyst. They are therefore of particular interest for systems in which rapid curing is desirable.

Interesting configuration possibilities are also opened up by combinations of the two groups. If, for example, methoxy is selected for X and ethoxy for Y within the same alkoxysilyl group, the desired reactivity of the terminating silyl groups can be adjusted particularly finely if silyl groups carrying exclusively methoxy groups are deemed too reactive and silyl groups carrying ethoxy groups not reactive enough for the intended use.

In addition to methoxy and ethoxy groups, it is of course also possible to use larger residues as hydrolyzable groups, which by nature exhibit lower reactivity. This is of particular interest if delayed curing is also to be achieved by means of the configuration of the alkoxy groups.

In various embodiments, in formula (II), X, Y, and Z are, independently of one another, preferably selected from a hydroxyl, a methyl, an ethyl, a methoxy, or an ethoxy group, wherein at least one of the substituents is a hydroxyl group, or a methoxy or an ethoxy group, preferably all are selected from methoxy or ethoxy, more preferably methoxy. Explicitly covered are thus methyldimethoxysilyl, trimethoxysilyl, triethoxysilyl, and ethyldiethoxysilyl, preferably methyldimethoxysilyl and trimethoxysilyl, more preferably trimethoxysilyl.

The invention according to the appended claims 8 to 11 also relates to a method for producing a radiation/moisture curable polymer as disclosed herein.

Such methods according to appended claims 8 and 9 comprising reacting the polymer that is to be capped with the terminal groups of formula (I) and formula (II) with an isocyanate that also comprises the desired terminal group. Said isocyanate is a compound of formula (Ia)

OCN-R¹³-C(=O)-C(R¹)=CH₂ (Ia)

and, an additional compound of formula (Ila) is used

OCN-R²³-SiXYZ (Ila),

wherein R¹³ and R²³ are independently a bond or a divalent substituted or unsubstituted hydrocarbon residue with 1 to 20 carbon atoms, preferably a substituted or unsubstituted (cyclo)alkylene or arylene residue with 1 to 14 carbon atoms;
wherein the polymer backbone is selected from the group consisting of polyoxyalkylenes, poly(meth)acrylates, polyesters, and combinations thereof.

The compounds of formulae (Ia) and (Ila) may be used simultaneously, for example in a mixture so that the reaction with the polymers occurs in parallel, or may be reacted with the polymer successively, e.g. in that first a reaction with compound (Ia) is carried out and then the remaining reactive groups of the polymer are reacted with compound (Ila).

To allow this reaction, the polymer comprises terminal NCO-reactive groups, for example hydroxyl or amino groups. It is understood that in all methods described herein the polymer to be capped by the described terminal groups may be a mixture of polymers.

In preferred embodiments, the polymers used are hydroxy-terminated polymers, e.g. polyols, such as polyether and/or polyester polyols, that react with the isocyanates under the formation of urethane bonds. In such embodiments, the definition of the polyether and polyester polyols above applies to the polymers to be used in these methods. This particularly relates to the molecular weights, polydispersity and functionalities defined above. Generally, while all the polymers described above can have multiple reactive termini that are used for the attachment of the terminal groups described herein, such as multiple hydroxyl groups, thus being polyols, it may be preferable that they comprise two or three such reactive terminal groups for attachment of the terminal groups of formulae (I) and (II), preferably only two, thus being linear polymers. Particularly preferred are diols and triols, more preferred are diols. If triols are used, these are preferably used in combination with diols, for example in a 1:1 molar ratio, more preferably in a 1:>1 molar ratio.

In case the polymers comprise terminal OH groups, the molar ratio of terminal OH groups of the polymer and the NCO groups of the compounds of formula (Ia), and optionally also formula (Ila), ranges from 1:0.5 to 1:1.5, preferably 1:0.9 to 1:1.1, more preferably 1:0.99 to 1:1.01. If alternative NCO-reactive groups are employed, the respective ratios may also apply.

Compounds of formula (Ia) include, without being limited thereto, isocyanato alkyl (meth)acrylates such as 2-isocyanatoethyl acrylate, 2-isocyanatoethyl methacrylate, 3-isocyanatopropyl (meth)acrylate, 2-isocyanatopropyl (meth)acrylate, 4-isocyanatobutyl (meth)acrylate, 3- isocyanatobutyl (meth)acrylate, and 2-isocyanatobutyl (meth)acrylate. Compounds of formula (Ila) useful herein include, without limitation, isocyanate containing alkoxy silanes to impart moisture curing, such as 3-isocyanato propyl trimethoxysilane, 3-isocyanato propyl triethoxysilane, and 3-isocyanato propyl methyl dimethoxysilane.

In the resulting reaction, essentially all hydroxy groups react with isocyanate groups forming urethane groups that link the desired terminal group to the polymer backbone.

As in the above-described method the polymers are modified with the desired terminal groups in only one step, the method is also referred to herein as 1-step method.

In an alternative method for producing a radiation/moisture curable polymer of the invention, the method comprises the 2 steps of:
(a) reacting a polymer terminated with an NCO-reactive group, such as an OH-terminated polymer, with a polyisocyanate of formula (V)

   (OCN)ₚ-R²-NCO (V)

   wherein R² is a substituted or unsubstituted hydrocarbon residue with 1 to 20 carbon atoms, preferably a substituted or unsubstituted (cyclo)alkylene or arylene residue with 1 to 14 carbon atoms;
   p is 1 to 3, preferably 1 or 2, more preferably 1; and
(b) reacting the resulting NCO-terminated polymer with a compound of formula (lb)

   B¹-R¹³-C(=O)-CR¹=CH₂ (Ib)

   wherein B¹ is an NCO-reactive group, preferably -OH. and a compound of formula (Ilb)

      B²-R²³-SiXYZ (IIb).
   wherein B² is an NCO-reactive group, preferably -N(R")₂, wherein R" can be hydrogen or a hydrocarbon moiety with 1 to 12 carbon atoms, optionally substituted, preferably alkyl or hydrogen, more preferably hydrogen;
   wherein R¹³ and R²³ are independently a bond or a divalent substituted or unsubstituted hydrocarbon residue with 1 to 20 carbon atoms, preferably a substituted or unsubstituted (cyclo)alkylene or arylene residue with 1 to 14 carbon atoms;
   wherein the polymer backbone is selected from the group consisting of polyoxyalkylenes, poly(meth)acrylates, polyesters, and combinations thereof.

"Substituted", as used herein in relation to R², refers to a saturated or unsaturated hydrocarbon including straight-chain and branched-chain and alicyclic and aromatic groups, in particular (cyclo)alkylene or arylene residue with 1 to 14 carbon atoms, which may be substituted preferably one or more substituents selected from C₁₋₈ alkyl, C₂₋₈ alkenyl, C₃₋₈ cycloalkyl, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms are independently nitrogen, oxygen, or sulfur. Substituted alkyl includes, for example, alkylaryl groups. In some embodiments, substituted also includes that one of the carbon atoms is replaced by a heteroatom, for example heteroalkyl groups. Heteroalkyl groups in which 1 or more carbon atoms are replaced by heteroatoms, particularly selected from O, S, N, and Si, are obtained by the replacement of one or more carbon atoms by heteroatoms. Examples of such heteroalkyl groups are, without limitation, methoxymethyl, ethoxyethyl, propoxypropyl, methoxyethyl, isopentoxypropyl, ethylaminoethyl, trimethoxypropylsilyl, etc. It is generally understood that the substituted R² depends on the used isocyanate and preferably has a structure that makes the compound of formula (V) any one of the isocyanates specifically disclosed herein.

"Substituted", as used herein in relation to R", includes substituents selected from the group consisting of -O-(C₁₋₁₀ alkyl), -O-(C₆₋₁₄ aryl), -NH₂, -N(C₁₋₁₀ alkyl)₂, such as -N(CH₃)₂, C₁₋₁₀ alkyl or alkoxy, C₂₋₁₀ alkenyl, C₂₋₁₀ alkynyl, C₃₋₈ cycloalkyl, -SiXYZ, C₆₋₁₄ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms independently are nitrogen, oxygen, or sulfur.

In various embodiments, R² is defined as R¹² and R²² above and is the NCO-bearing residue of any one of the diisocyanates disclosed above, for example IPDI, TDI or MDI.

In these methods, the first step serves the purpose to modify the polymers such that they are NCO-terminated. The reactive NCO-termini of the polymer obtained in the first step of the reaction are then used to couple the endgroups of formula (I) and optionally also formula (II) to the polymer.

As described for the one-step method above, also in this method the polymer comprises terminal NCO-reactive groups, for example hydroxyl or amino groups. Also in the two-step method described herein the polymer to be reacted with the polyisocyanate and then capped by the described terminal groups may be a mixture of polymers. Again, in preferred embodiments, the polymers used are hydroxy-terminated polymers, e.g. polyols, such as polyether and/or polyester polyols, that react with the isocyanates under the formation of urethane bonds. In such embodiments, the definition of the polyether and polyester polyols above applies to the polymers to be used in these methods. This particularly relates to the molecular weights, polydispersity and functionalities defined above. Generally, while all the polymers described above can have multiple reactive termini that are used for the attachment of the terminal groups described herein, such as multiple hydroxyl groups, thus being polyols, it may be preferable that they comprise two or three such reactive terminal groups for attachment of the terminal groups of formulae (I) and (II), preferably only two, thus being linear polymers. Particularly preferred are diols and triols, more preferred are diols. If triols are used, these are preferably used in combination with diols, for example in a 1:1 molar ratio, more preferably in a 1:>1 molar ratio.

In all of the described methods according to the invention, i.e. the one-step and two-step method, appropriate catalysts and reaction conditions, all of which are generally known to those skilled in the art, can be used/employed. If isocyanate and hydroxyl groups are used, in principle, any compound that can catalyze the reaction of a hydroxyl group and an isocyanato group to form a urethane bond can be used. Some useful examples include: tin carboxylates such as dibutyltin dilaurate (DBTL), dibutyltin diacetate, dibutyltin diethylhexanoate, dibutyltin dioctoate, dibutyltin dimethylmaleate, dibutyltin diethylmaleate, dibutyltin dibutylmaleate, dibutyltin diiosooctylmaleate, dibutyltin ditridecylmaleate, dibutyltin dibenzylmaleate, dibutyltin maleate, dibutyltin diacetate, tin octaoate, dioctyltin distearate, dioctyltin dilaurate (DOTL), dioctyltin diethylmaleate, dioctyltin diisooctylmaleate, dioctyltin diacetate, and tin naphthenoate; tin alkoxides such as dibutyltin dimethoxide, dibutyltin diphenoxide, and dibutyltin diisoproxide; tin oxides such as dibutyltin oxide and dioctyltin oxide; reaction products between dibutyltin oxides and phthalic acid esters; dibutyltin bisacetylacetonate; titanates such as tetrabutyl titanate and tetrapropyl titanate; organoaluminum compounds such as aluminum trisacetylacetonate, aluminum trisethylacetoacetate, and diisopropoxyaluminum ethylacetoacetate; chelate compounds such as zirconium tetraacetylacetonate and titanium tetraacetylacetonate; lead octanoate; amine compounds or salts thereof with carboxylic acids, such as butylamine, octylamine, laurylamine, dibutylamines, monoethanolamines, diethanolamines, triethanolamine, diethylenetriamine, triethylenetetramine, oleylamines, cyclohexylamine, benzylamine, diethylaminopropylamine, xylylenediamine, triethylenediamine, guanidine, diphenylguanidine, 2,4,6- tris(dimethylaminomethyl)phenol, 2,2'-dimorpholinodiethylether, triethylenediamine, morpholine, N-methylmorpholine, 2-ethyl-4-methylimidazole and 1,8-diazabicyclo-(5,4,0)-undecene-7 (DBU); aliphatic carboxylate salts or acetylacetonates of potassium, iron, indium, zinc, bismuth, titanium, cobalt or copper. Some of these catalysts are also disclosed below as components of the invention. Preferred catalysts are metal catalysts based on tin, bismuth, titanium, zinc and cobalt as well as amines. More preferred are catalysts based on tin, bismuth, titanium and the known amine catalysts. The catalyst is preferably present in an amount of from 0.005 to 3.5 wt.% based on the total composition weight.

In the two-step method, the first step, i.e. the functionalization of the polymer termini with NCO groups is preferably carried out at a temperature in the range of 0 to 120°C, more preferably 50 to 100°C, most preferably 70-90°C. The second step of reacting the NCO-terminated polymer with the NCO-reactive group modified (meth)acrylates and silanes is then preferably carried out at a temperature in the range of 0 to 90°C, more preferable 10 to 50°C, most preferably 20-30°C.

In the present invention, molar ratio of terminal OH groups to polyisocyanate of formula (V) may range from 1:0.5 to 1:1.5, preferably from 1:0.9 to 1:1.1, more preferably from 1:0.99 to 1:1.01. As disclosed for the 1-step method, this ratio ensures that essentially all hydroxy groups are reacted with isocyanates so that essentially a completely NCO-terminated polymer is obtained.

In various embodiments, the molar ratio of unreacted NCO groups after step (a) to the sum of B¹ and B² groups is 1:0.5 to 1:1.5, preferably 1:0.9 to 1:1.0, more preferably 1:0.94 to 1:0.96.

The molar ratio of polymer terminal NCO-reactive groups, such as OH groups, to NCO groups of the polyisocyanate of formula (V) to the NCO-reactive groups of the (meth)acrylate/silane, such as OH or amine groups, may thus be about 1: about 1: about 1, more preferably about 1: about 1: about 0.95. It may be preferred that the amount of (meth)acrylate/silane used is about 5% less with respect to the number of NCO-reactive groups than stochiometrically necessary (as per calculation) for all NCO groups. "About", as used herein in relation to numerical values, typically relates to said value ±10%, preferably ±5%.

The amount of compounds of formula (Ib) and (IIb) may be selected such that essentially all NCO groups are reacted with the respective compounds. As in all methods described herein, in case both types of compounds for both types of terminal groups are used, the second step may be subdivided in a first step in which the first compound, for example the compound of formula (Ib) is reacted with the NCO-terminated polymer, and a second step in which the remaining NCO groups are reacted with the compound of formula (IIb).

In various embodiments, the polyisocyanate of formula (V) is a diisocyanate selected from the group consisting of ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3- and -1,4-diisocyanate, bis(2-isocyanatoethyl)fumarate, 1-isocyanato-3,3,5-trimethyl-5-isocyanatomethylcyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, 4,4'-diphenylmethane diisocyanate (MDI), and the isomeric mixtures thereof, the partially or completely hydrogenated cycloalkyl derivatives of MDI, alkyl-substituted diphenylmethane diisocyanates, 4,4'-diisocyanatophenylperfluorethane, phthalic acid-bis-isocyanatoethyl ester, 1-chloromethylphenyl-2,4- or -2,6-diisocyanate, 1-bromomethylphenyl-2,4- or -2,6-diisocyanate, 3,3'-bis-chloromethyl ether-4,4'-diphenyl diisocyanate, sulfur-containing diisocyanates, diisocyanates of dimer fatty acids, or mixtures of two or more of the afore-mentioned diisocyanates, preferably IPDI, TDI and MDI.

In various embodiments, the compound of formula (Ib) is selected from the group consisting of hydroxyethylmethacrylate, hydroxyethylacrylate, hydroxypropylacrylate, hydroxypropylmethacrylate, hydroxybutylmethacrylate, hydroxybuylacrylate, acrylic acid, and methacrylic acid. The hydroxyethyl(meth)acrylates are preferably 2-hydroxyethyl(meth)acrylates. The hydroxypropyl(meth)acrylates are preferably 2- or 3-hydroxypropyl or 2-hydroxy-1-methylethyl(meth)acrylates. The hydroxybutyl(meth)acrylates are preferably 2-, 3- or 4-hydroxybutyl- or 2- or 3-hydroxy-1-methylpropyl(meth)acrylate. Generally, if not explicitly indicated otherwise, of all acrylates specifically described herein, the corresponding methacrylates may be used and vice versa. Furthermore, it is understood that wherever reference is made herein to acrylates in general, methacrylates may also be used and vice versa. Additional modified (meth)acrylates have been described above.

In various embodiments, the compound of formula (IIb) is selected from the group consisting of 3-aminopropyltrimethoxysilane, 3-aminopropyltriethoxysilane, 3-aminopropylmethyldimethoxysilane, N-(2-aminoethyl)-3-aminopropyltrimethoxysilane, 3-(trimethoxysilyl)-n-(3-(trimethoxysilyl)propyl)-1-propanamine (CAS 82985-35-1), 3-triethoxysilyl-N-(3-triethoxysilylpropyl)propan-1-amine (CAS 13497-18-2), and N-(Phenylamino)methyltrimethoxysilane.

### EXAMPLES

### Example 1 (not according to appended claim 1) : (Meth)Acrylate-terminated polymers

**Table 1 (all amounts in wt.-%)**

| **Component/Formulation** | 1 | 2 | 3 | 4 | 5 |
|---|---|---|---|---|---|
| Polyol 2.000 (di-funct) | 73,98 | | 20,48 | 74,27 | 73,17 |
| Polyol 12.000 (di-funct) | | 94,47 | | | |
| Polyol 6.300 (tri-funct) | | | 61,68 | | |
| IPDI | 16,38 | 3,47 | 11,49 | 16,48 | 16,28 |
| Hydroxy Ethyl Methacrylate | 9,57 | 1,98 | 6,3 | 9,18 | |
| Hydroxy Butyl Acrylate | | | | | 10,48 |
| DOTL | 0,07 | 0,08 | 0,05 | 0,07 | 0,07 |
| Total | 100 | 100 | 100 | 100 | 100 |

### DOTL: Dioctyl tin dilaurate

In a first step, the polyol, the isocyanate (IPDI) and the catalyst (DOTL) were mixed for 2.5 hours at 80°C under nitrogen at 400U/minute. The molar ratio of OH groups to NCO groups was 1:1. After the reaction, the reaction mixtures were allowed to cool to 25°C and then the acrylate was added (in an amount that corresponds to a molar ratio of OH (polyol):NCO:OH (acrylate) of 1:1:1 (formulations 1, 2 and 5) and 1:1:0.95 (formulations 3, 4)). Mixing was carried out for 3 hours at 25°C. The obtained formulations were clear of slightly cloudy (formulation 2) liquids. The properties of these polymers are shown in Table 2.

**Table 2**

| **Formulation** | 1 | 2 | 3 | 4 | 5 |
|---|---|---|---|---|---|
| Molecular weight (Mw) (GPC) | 9300 | 62409 | 29997 | 9419 | 9528 |
| | 5914 | 28676 | 6850 | 6065 | 5930 |
| | 2914 | 13834 | 3041 | 3139 | 3123 |
| PD (Polydispersity) | 1,01 | 1,06 | 1,2 | 1,00 | 1,01 |
| | 1,01 | 1,01 | 1,01 | 1,01 | 1,01 |
| | 1,02 | 1,01 | 1,02 | 1,02 | 1,02 |
| Viscosity mPa.s | 33200 | 142400 | 87840 | 27370 | 25950 |
| NMR results | No NCO free HEMA 8% | No PPG OH No NCO free HEMA 5% | No PPG OH No NCO No free HEMA | No PPG OH Trace NCO No free HEMA | No NCO 10% free HBA |

| **Stability study** | | | | | |
|---|---|---|---|---|---|
| viscosity 14d RT | 34020 | | | | 27050 |
| Viscosity 28d RT | 30280 | | | | 28770 |
| Viscosity 42d RT | 29930 | | | | 26990 |
| Viscosity 14d 50°C | 34470 | | | | 26200 |
| Viscosity 28d 50°C | 31790 | | | | 24550 |
| Viscosity 42d 50°C | 33380 | | | | 26750 |

## Claims

1. A radiation/moisture dual curable polymer comprising at least one terminal group of the general formula (I)
-A¹-C(=O)-CR¹=CH₂ (I),
wherein
A¹ is a divalent bonding group containing at least one heteroatom; and
R¹ is selected from H and C₁-C₄ alkyl, preferably H and methyl;
, wherein the polymer has a polyoxyethylene backbone or a polyoxyethylene-polyoxypropylene backbone,
wherein A¹ is a group of formula (III)
-R¹¹-A1¹-(R¹²-A¹²)ₙ-R¹³- (III)
wherein
R¹¹, R¹², and R¹³ are independently a bond or a divalent substituted or unsubstituted hydrocarbon residue with 1 to 20 carbon atoms, preferably a substituted or unsubstituted (cyclo)alkylene or arylene residue with 1 to 14 carbon atoms;
A¹¹ and A¹² are each independently a divalent group selected from -O-C(=O)-NH-, -NH-C(=O)O-, -NH-C(=O)-NH-, -NR"-C(=O)-NH- , -NH-C(=O)-NR"- , -NH-C(=O)-, -C(=O)-NH - , -C(=O)-O-, - O-C(=O)-, -O-C(=O)-O-, -S-C(=O)-NH- , -NH-C(=O)-S- , -C(=O)-S-, -S-C(=O)-, -S-C(=O)-S- , - C(=O)-, -S-, -O-, and -NR"-, wherein R" can be hydrogen or a hydrocarbon moiety with 1 to 12 carbon atoms, optionally substituted, preferably alkyl or hydrogen;
and n is 0 or 1,
wherein said polymer comprises at least one terminal group of the general formula (II)
-A²-SiXYZ (II),
wherein X, Y, Z are, independently of one another, selected from the group consisting of a hydroxyl group and C₁ to C₈ alkyl, C₁ to C₈ alkoxy, and C₁ to C₈ acyloxy groups, wherein X, Y, Z are substituents directly bound with the Si atom or the two of the substituents X, Y, Z form a ring together with the Si atom to which they are bound, and at least one of the substituents X, Y, Z is selected from the group consisting of a hydroxyl group, C₁ to C₈ alkoxy and C₁ to C₈ acyloxy groups; and
A² is a divalent bonding group containing at least one heteroatom.

2. The radiation/moisture dual curable polymer of claim 1, wherein the polymer comprises at least two terminal groups of the general formula (I).

3. The radiation/moisture dual curable polymer of any one of claims 1 or 2, wherein A¹ and/or A² comprises a substituted or unsubstituted ether, amide, carbamate, urethane, urea, imino, siloxane, carboxylate, carbamoyl, amidino, carbonate, sulfonate or sulfinate group, preferably a urea and/or urethane group.

4. The radiation/moisture dual curable polymer of any one of claims 1 to 3, wherein
R¹¹ is a bond or a divalent substituted or unsubstituted hydrocarbon residue with 1 to 20 carbon atoms, preferably an unsubstituted alkylene residue with 1 to 4 carbon atoms;
A¹¹ is a divalent group selected from -O-C(=O)-NH-, -NH-C(=O)-NH-, and -NR"-C(=O)-NH- , preferably -O-C(=O)-NH-;
R¹³ is a bond or a divalent substituted or unsubstituted hydrocarbon residue with 1 to 20 carbon atoms, preferably a substituted or unsubstituted alkylene residue with 1 to 8 carbon atoms;
n is 0 or 1, provided that if n is 1,
R¹² is a divalent substituted or unsubstituted hydrocarbon residue with 1 to 20 carbon atoms, preferably a substituted or unsubstituted (cyclo)alkylene residue or arylene residue with 1 to 14 carbon atoms; and
A¹² is a divalent group selected from -NH-C(=O)O-, -NH-C(=O)-NH-, and -NH-C(=O)-NR"-, preferably -NH-C(=O)O.

5. The radiation/moisture dual curable polymer of any one of claims 2 to 4, wherein A² is a group of formula (IV)
-R²¹-A²¹-(R²²-A²²)ₘ-R²³- (IV)
wherein
R²¹, R²², and R²³ are independently a bond or a divalent substituted or unsubstituted hydrocarbon residue with 1 to 20 carbon atoms, preferably a substituted or unsubstituted (cyclo)alkylene or arylene residue with 1 to 14 carbon atoms;
A²¹ and A²² are each independently a divalent group selected from -O-C(=O)-NH-, -NH-C(=O)O-, -NH-C(=O)-NH-, -NR"-C(=O)-NH- , -NH-C(=O)-NR"- , -NH-C(=O)-, -C(=O)-NH - , -C(=O)-O-, - O-C(=O)-, -O-C(=O)-O-, -S-C(=O)-NH- , -NH-C(=O)-S- , -C(=O)-S-, -S-C(=O)-, -S-C(=O)-S- , - C(=O)-, -S-, -O-, and -NR"-, wherein R" can be hydrogen or a hydrocarbon moiety with 1 to 12 carbon atoms, optionally substituted, preferably alkyl or hydrogen; and
m is 0 or 1.

6. The radiation/moisture dual curable polymer of claim 5, wherein
R²¹ is a bond or a divalent substituted or unsubstituted hydrocarbon residue with 1 to 20 carbon atoms, preferably an unsubstituted alkylene residue with 1 to 4 carbon atoms;
R²³ is a bond or a divalent substituted or unsubstituted hydrocarbon residue with 1 to 20 carbon atoms, preferably an unsubstituted alkylene residue with 1 to 3 carbon atoms;
n is 0 or 1, provided that if n is 0,
A²¹ is a divalent group selected from -O-, -O-C(=O)-NH-, -NH-C(=O)-NH-, and -NR"-C(=O)-NH-, preferably -O-, -O-C(=O)-NH-, or NH-C(=O)-NH-; and
provided that if n is 1,
A²¹ is a divalent group selected from -O-, -O-C(=O)-NH-, -NH-C(=O)-NH-, and -NR"-C(=O)-NH-, preferably -O-C(=O)-NH;
R²² is a divalent substituted or unsubstituted hydrocarbon residue with 1 to 20 carbon atoms, preferably a substituted or unsubstituted (cyclo)alkylene residue or arylene residue with 1 to 14 carbon atoms; and
A²² is a divalent group selected from -NH-C(=O)O-, -NH-C(=O)-NH-, and -NH-C(=O)-NR"-, preferably -NH-C(=O)-NH.

7. The radiation/moisture dual curable polymer of any one of claims 1 to 6, wherein
(1) in formula (II), X, Y, and Z are, independently of one another, selected from a hydroxyl, a methyl, an ethyl, a methoxy, or an ethoxy group, wherein at least one of the substituents is a hydroxyl group, or a methoxy or an ethoxy group, preferably all are selected from methoxy or ethoxy, more preferably methoxy; and/or
(2) R¹¹, R²¹ and R²³ in the general formulae (III) and/or (IV) are selected from a bond, methylene, ethylene, or n-propylene group.

8. Method for producing a radiation/moisture dual curable polymer of any one of claims 1 to 7, comprising reacting a OH-terminated polymer with a compound of formula (la)
OCN-R¹³-C(=O)-C(R¹)=CH₂ (la)
and a compound of formula (Ila)
OCN-R²³-SiXYZ (IIa),
wherein
R¹³ is a bond or a divalent substituted or unsubstituted hydrocarbon residue with 1 to 20 carbon atoms, preferably a substituted or unsubstituted (cyclo)alkylene or arylene residue with 1 to 14 carbon atoms, and
R²³ is a bond or a divalent substituted or unsubstituted hydrocarbon residue with 1 to 20 carbon atoms, preferably a substituted or unsubstituted (cyclo)alkylene or arylene residue with 1 to 14 carbon atoms;
wherein the polymer backbone is selected from the group consisting of polyoxyalkylenes, poly(meth)acrylates, polyesters, and combinations thereof.

9. The method of claim 8, wherein
(i) the molar ratio of terminal OH groups of the polymer and the NCO groups ranges from 1:0.5 to 1:1.5, preferably 1:0.9 to 1:1.1, more preferably 1:0.99 to 1:1.01; and/or
(ii) the reaction is carried out in the presence of a suitable catalyst.

10. Method for producing a radiation/moisture dual curable polymer of any one of claims 1 to 7, comprising
(a) reacting a OH-terminated polymer with a polyisocyanate of formula (V)
(OCN)ₚ-R²-NCO (V)
wherein R² is a substituted or unsubstituted hydrocarbon residue with 1 to 20 carbon atoms, preferably a substituted or unsubstituted (cyclo)alkylene or arylene residue with 1 to 14 carbon atoms;
p is 1 to 3, preferably 1 or 2, more preferably 1; and
(b) reacting the resulting NCO-terminated polymer with a compound of formula (lb)
B¹-R¹³-C(=O)-CR¹=CH₂ (lb)
wherein B¹ is an NCO-reactive group, preferably -OH.
and a compound of formula (IIb)
B²-R²³-SiXYZ (IIb).
wherein B² is an NCO-reactive group, preferably -N(R")₂, wherein R" can be hydrogen or a hydrocarbon moiety with 1 to 12 carbon atoms, optionally substituted, preferably alkyl or hydrogen, more preferably hydrogen;
wherein R¹³ is a divalent substituted or unsubstituted hydrocarbon residue with 1 to 20 carbon atoms, preferably a substituted or unsubstituted (cyclo)alkylene or arylene residue with 1 to 14 carbon atoms, and R²³ is a bond or a divalent substituted or unsubstituted hydrocarbon residue with 1 to 20 carbon atoms, preferably a substituted or unsubstituted (cyclo)alkylene or arylene residue with 1 to 14 carbon atoms;
wherein the polymer backbone is selected from the group consisting of polyoxyalkylenes, poly(meth)acrylates, polyesters, and combinations thereof

11. The method of claim 10, wherein
(i) the molar ratio of terminal OH groups to polyisocyanate of formula (V) is 1:0.5 to 1:1.5, preferably 1:0.9 to 1:1.1, more preferably 1:0.99 to 1:1.01; and/or
(ii) the molar ratio of unreacted NCO groups after step (a) to the sum of B¹ and B² groups is 1:0.5 to 1:1.5, preferably 1:0.9 to 1:1.0, more preferably 1:0.94 to 1:0.96; and/or
(iii) the polyisocyanate of formula (V) is a diisocyanate selected from the group consisting of ethylene diisocyanate, 1 ,4-tetramethylene diisocyanate, 1,4-tetramethoxybutane diisocyanate, 1,6-hexamethylene diisocyanate (HDI), cyclobutane-1,3-diisocyanate, cyclohexane-1,3- and -1,4-diisocyanate, bis(2-isocyanatoethyl)fumarate, 1-isocyanato-3,3,5-trimethyl-5-isocyanatomethylcyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, 4,4'-diphenylmethane diisocyanate (MDI), and the isomeric mixtures thereof, the partially or completely hydrogenated cycloalkyl derivatives of MDI, alkyl-substituted diphenylmethane diisocyanates, 4,4'-diisocyanatophenylperfluorethane, phthalic acid-bis-isocyanatoethyl ester, 1-chloromethylphenyl-2,4- or-2,6-diisocyanate, 1-bromomethylphenyl-2,4- or-2,6-diisocyanate, 3,3'-bis-chloromethyl ether-4,4'-diphenyl diisocyanate, sulfur-containing diisocyanates, diisocyanates of dimer fatty acids, or mixtures of two or more of the afore-mentioned diisocyanates, preferably IPDI, TDI and MDI; and/or
(iv) the compound of formula (lb) is selected from the group consisting of hydroxyethylmethacrylate, hydroxyethylacrylate, hydroxypropylacrylate, hydroxypropylmethacrylate, hydroxybutylmethacrylate, hydroxybuylacrylate, acrylic acid, and methacrylic acid; and/or,
(v) the compound of formula (IIb) is selected from the group consisting of 3-aminopropyltrimethoxysilane, 3-aminopropyltriethoxysilane, 3-aminopropylmethyldimethoxysilane, N-(2-aminoethyl)-3-aminopropyltrimethoxysilane, 3-(trimethoxysilyl)-n-(3-(trimethoxysilyl)propyl)-1-propanamine (CAS 82985-35-1), 3-triethoxysilyl-N-(3-triethoxysilylpropyl)propan-1-amine (CAS 13497-18-2), and N-(Phenylamino)methyltrimethoxysilane; and/or
(vi) the reaction is carried out in the presence of a suitable catalyst.

## Patentansprüche

1. Durch Strahlung/Feuchtigkeit zweifach härtbares Polymer, umfassend mindestens eine endständige Gruppe der allgemeinen Formel (I)
-A¹-C(=O)-CR¹=CH₂ (I),
wobei
A¹ eine zweiwertige Bindegruppe ist, die mindestens ein Heteroatom enthält; und
R¹ aus H und C₁₋₄-Alkyl, vorzugsweise H und Methyl, ausgewählt ist;
wobei das Polymer ein Polyoxyethylen-Rückgrat oder ein Polyoxyethylen-Polyoxypropylen-Rückgrat aufweist,
wobei A¹ eine Gruppe von Formel (III) ist
-R¹¹-A¹¹-(R¹²-A¹²)ₙ-R¹³- (III)
wobei
R¹¹, R¹² und R¹³ unabhängig eine Bindung oder ein zweiwertiger substituierter oder unsubstituierter Kohlenwasserstoffrückstand mit 1 bis 20 Kohlenstoffatomen, vorzugsweise ein substituierter oder unsubstituierter (Cyclo)alkylen- oder Arylenrückstand mit 1 bis 14 Kohlenstoffatomen, sind;
A¹¹ und A¹² jeweils unabhängig eine zweiwertige Gruppe sind, ausgewählt aus -O-C(=O)-NH-, -NH-C(=O)O-, -NH-C(=O)-NH-, -NR"-C(=O)-NH-, -NH-C(=O)-NR"-, -NH-C(=O)-, -C(=O)-NH-, -C(=O)-O-, - O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, und -NR"-, wobei R" Wasserstoff oder ein Kohlenwasserstoffrest mit 1 bis 12 Kohlenstoffatomen, gegebenenfalls substituiert, vorzugsweise C₁-C₂-Alkyl oder Wasserstoff, sein kann;
und n 0 oder 1 ist,
wobei das Polymer mindestens eine endständige Gruppe der allgemeinen Formel (II) umfasst
-A²-SiXYZ (II),
wobei X, Y, Z unabhängig voneinander aus der Gruppe ausgewählt sind, bestehend aus einer Hydroxylgruppe und C₁- bis Cs-Alkyl-, C₁- bis C₈-Alkoxy- und C₁- bis C₈-Acyloxygruppen, wobei X, Y, Z Substituenten sind, die direkt an das Si-Atom gebunden sind, oder zwei der Substituenten X, Y, Z gemeinsam mit dem Si-Atom, an das sie gebunden sind, einen Ring ausbilden, und mindestens einer der Substituenten X, Y, Z aus der Gruppe ausgewählt ist, bestehend aus einer Hydroxylgruppe, C₁- bis Cs-Alkoxy- und C₁- bis C₈-Acyloxygruppen, und
A² eine zweiwertige Bindegruppe ist, die mindestens ein Heteroatom enthält.

2. Durch Strahlung/Feuchtigkeit zweifach härtbares Polymer nach Anspruch 1, wobei das Polymer mindestens zwei endständige Gruppen der allgemeinen Formel (I) umfasst.

3. Durch Strahlung/Feuchtigkeit zweifach härtbares Polymer nach einem der Ansprüche 1 oder 2, wobei A¹ und/oder A² eine substituierte oder unsubstituierte Ether-, Amid-, Carbamat-, Urethan-, Harnstoff-, Imino-, Siloxan-, Carboxylat-, Carbamoyl-, Amidino-, Carbonat-, Sulfonat- oder Sulfinatgruppe, vorzugsweise eine Harnstoff- und/oder Urethangruppe, umfasst.

4. Durch Strahlung/Feuchtigkeit zweifach härtbares Polymer nach einem der Ansprüche 1 bis 3, wobei
R¹¹ eine Bindung oder ein zweiwertiger substituierter oder unsubstituierter Kohlenwasserstoffrückstand mit 1 bis 20 Kohlenstoffatomen, vorzugsweise ein unsubstituierter Alkylenrückstand mit 1 bis 4 Kohlenstoffatomen, ist;
A¹¹ eine zweiwertige Gruppe ist, ausgewählt aus -O-C(=O)-NH-, -NH-C(=O)-NH- und -NR"-C(=O)-NH-, vorzugsweise -O-C(=O)-NH-;
R¹³ eine Bindung oder ein zweiwertiger substituierter oder unsubstituierter Kohlenwasserstoffrückstand mit 1 bis 20 Kohlenstoffatomen, vorzugsweise ein substituierter oder unsubstituierter Alkylenrückstand mit 1 bis 8 Kohlenstoffatomen, ist;
n 0 oder 1 ist, vorausgesetzt, dass, falls n 1 ist,
R¹² ein zweiwertiger substituierter oder unsubstituierter Kohlenwasserstoffrückstand mit 1 bis 20 Kohlenstoffatomen, vorzugsweise ein substituierter oder unsubstituierter (Cyclo)alkylenrückstand oder Arylenrückstand mit 1 bis 14 Kohlenstoffatomen, ist; und
A¹² eine zweiwertige Gruppe ist, ausgewählt aus -NH-C(=O)O-, -NH-C(=O)-NH- und -NH-C(=O)-NR"-, vorzugsweise -NH-C(=O)O.

5. Durch Strahlung/Feuchtigkeit zweifach härtbares Polymer nach einem der Ansprüche 2 bis 4, wobei A² eine Gruppe von Formel (IV) ist
-R²¹-A²¹-(R²²-A²²)ₘ-R²³- (IV)
wobei
R²¹, R²² und R²³ unabhängig eine Bindung oder ein zweiwertiger substituierter oder unsubstituierter Kohlenwasserstoffrückstand mit 1 bis 20 Kohlenstoffatomen, vorzugsweise ein substituierter oder unsubstituierter (Cyclo)alkylen- oder Arylenrückstand mit 1 bis 14 Kohlenstoffatomen, sind;
A²¹ und A²² jeweils unabhängig eine zweiwertige Gruppe sind, ausgewählt aus -O-C(=O)-NH-, -NH-C(=O)O-, -NH-C(=O)-NH-, -NR"-C(=O)-NH-, -NH-C(=O)-NR"-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, und -NR", wobei R" Wasserstoff oder ein Kohlenwasserstoffrest mit 1 bis 12 Kohlenstoffatomen, gegebenenfalls substituiert, vorzugsweise C₁-C₂-Alkyl oder Wasserstoff, sein kann; und
m 0 oder 1 ist.

6. Durch Strahlung/Feuchtigkeit zweifach härtbares Polymer nach Anspruch 5, wobei
R²¹ eine Bindung oder ein zweiwertiger substituierter oder unsubstituierter Kohlenwasserstoffrückstand mit 1 bis 20 Kohlenstoffatomen, vorzugsweise ein unsubstituierter Alkylenrückstand mit 1 bis 4 Kohlenstoffatomen, ist;
R²³ eine Bindung oder ein zweiwertiger substituierter oder unsubstituierter Kohlenwasserstoffrückstand mit 1 bis 20 Kohlenstoffatomen, vorzugsweise ein unsubstituierter Alkylenrückstand mit 1 bis 3 Kohlenstoffatomen, ist;
n 0 oder 1 ist, vorausgesetzt, dass, falls n 0 ist,
A²¹ eine zweiwertige Gruppe ist, ausgewählt aus -O-, -O-C(=O)-NH-, -NH-C(=O)-NH- und -NR"-C(=O)-NH-, vorzugsweise -O-, -O-C(=O)-NH- oder NH-C(=O)-NH-; und
vorausgesetzt, dass, falls n 1 ist,
A²¹ eine zweiwertige Gruppe ist, ausgewählt aus -O-, -O-C(=O)-NH-, -NH-C(=O)-NH- und -NR"-C(=O)-NH-, vorzugsweise -O-C(=O)-NH;
R²² ein zweiwertiger substituierter oder unsubstituierter Kohlenwasserstoffrückstand mit 1 bis 20 Kohlenstoffatomen, vorzugsweise ein substituierter oder unsubstituierter (Cyclo)alkylenrückstand oder Arylenrückstand mit 1 bis 14 Kohlenstoffatomen, ist; und
A²² eine zweiwertige Gruppe ist, ausgewählt aus -NH-C(=O)O-, -NH-C(=O)-NH- und -NH-C(=O)-NR"-, vorzugsweise -NH-C(=O)-NH.

7. Durch Strahlung/Feuchtigkeit zweifach härtbares Polymer nach einem der Ansprüche 1 bis 6, wobei
(1) in Formel (II) X, Y und Z unabhängig voneinander aus einer Hydroxyl-, einer Methyl-, einer Ethyl-, einer Methoxy- oder einer Ethoxygruppe ausgewählt sind, wobei mindestens einer der Substituenten eine Hydroxylgruppe oder eine Methoxy- oder eine Ethoxygruppe ist, vorzugsweise alle aus Methoxy oder Ethoxy, bevorzugter Methoxy, ausgewählt sind; und/oder
(2) R¹¹, R²¹ und R²³ in den allgemeinen Formeln (III) und/oder (IV) aus einer Bindung, einer Methylen-, Ethylen- oder n-Propylengruppe ausgewählt sind.

8. Verfahren zum Produzieren eines durch Strahlung/Feuchtigkeit zweifach härtbaren Polymers nach einem der Ansprüche 1 bis 7, umfassend ein Umsetzen eines OH-terminierten Polymers mit einer Verbindung von Formel (la)
OCN-R¹³-C(=O)-C(R¹)=CH₂ (la)
und einer Verbindung von Formel (IIa)
OCN-R²³-SiXYZ (IIa),
wobei
R¹³ eine Bindung oder ein zweiwertiger substituierter oder unsubstituierter Kohlenwasserstoffrückstand mit 1 bis 20 Kohlenstoffatomen, vorzugsweise ein substituierter oder unsubstituierter (Cyclo)alkylen- oder Arylenrückstand mit 1 bis 14 Kohlenstoffatomen, ist, und
R²³ eine Bindung oder ein zweiwertiger substituierter oder unsubstituierter Kohlenwasserstoffrückstand mit 1 bis 20 Kohlenstoffatomen, vorzugsweise ein substituierter oder unsubstituierter (Cyclo)alkylen- oder Arylenrückstand mit 1 bis 14 Kohlenstoffatomen, ist;
wobei das Polymerrückgrat aus der Gruppe ausgewählt ist, bestehend aus Polyoxyalkylenen, Poly(meth)acrylaten, Polyestern und Kombinationen davon.

9. Verfahren nach Anspruch 8, wobei
(i) das Molverhältnis von endständigen OH-Gruppen des Polymers und der NCO-Gruppen im Bereich von 1 : 0,5 bis 1 : 1,5, vorzugsweise 1 : 0,9 bis 1 : 1,1, bevorzugter 1 : 0,99 bis 1 : 1,01, liegt; und/oder
(ii) die Umsetzung in der Gegenwart eines geeigneten Katalysators vorgenommen wird.

10. Verfahren zum Produzieren eines durch Strahlung/Feuchtigkeit zweifach härtbaren Polymers nach einem der Ansprüche 1 bis 7, umfassend
(a) Umsetzen eines OH-terminierten Polymers mit einem Polyisocyanat von Formel (V)
(OCN)ₚ-R²-NCO (V)
wobei R² ein substituierter oder unsubstituierter Kohlenwasserstoffrückstand mit 1 bis 20 Kohlenstoffatomen, vorzugsweise ein substituierter oder unsubstituierter (Cyclo)alkylen- oder Arylenrückstand mit 1 bis 14 Kohlenstoffatomen, ist;
p 1 bis 3, vorzugsweise 1 oder 2, bevorzugter 1, ist; und
(b) Umsetzen des resultierenden NCO-terminierten Polymers mit einer Verbindung von Formel (Ib)
B¹-R¹³-C(=O)-CR¹=CH₂ (Ib)
wobei B¹ eine NCO-reaktive Gruppe, vorzugsweise -OH, ist.
und einer Verbindung von Formel (IIb)
B²-R²³-SiXYZ (IIb).
wobei B² eine NCO-reaktive Gruppe ist, vorzugsweise -N(R")2, wobei R" Wasserstoff oder ein Kohlenwasserstoffrückstand mit 1 bis 12 Kohlenstoffatomen, gegebenenfalls substituiert, vorzugsweise C₁-C₂-Alkyl oder Wasserstoff, bevorzugter Wasserstoff, sein kann;
wobei R¹³ ein zweiwertiger substituierter oder unsubstituierter Kohlenwasserstoffrückstand mit 1 bis 20 Kohlenstoffatomen, vorzugsweise ein substituierter oder unsubstituierter (Cyclo)alkylen- oder Arylenrückstand mit 1 bis 14 Kohlenstoffatomen ist, und R²³ eine Bindung oder ein zweiwertiger substituierter oder unsubstituierter Kohlenwasserstoffrückstand mit 1 bis 20 Kohlenstoffatomen, vorzugsweise ein substituierter oder unsubstituierter (Cyclo)alkylen- oder Arylenrückstand mit 1 bis 14 Kohlenstoffatomen ist;
wobei das Polymerrückgrat aus der Gruppe ausgewählt ist, bestehend aus Polyoxyalkylenen, Poly(meth)acrylaten, Polyestern und Kombinationen davon.

11. Verfahren nach Anspruch 10, wobei
(i) das Molverhältnis von endständigen OH-Gruppen zu Polyisocyanat von Formel (V) 1 : 0,5 bis 1 : 1,5, bevorzugt 1 : 0,9 bis 1 : 1,1, bevorzugter 1 : 0,99 bis 1 : 1,01 beträgt; und/oder
(ii) das Molverhältnis von nicht umgesetzten NCO-Gruppen nach Schritt (a) zu der Summe von B¹- und B²-Gruppen 1 : 0,5 bis 1 : 1,5, bevorzugt 1 : 0,9 bis 1 : 1,0, bevorzugter 1 : 0,94 bis 1 : 0,96 beträgt; und/oder
(iii) das Polyisocyanat von Formel (V) ein Diisocyanat ist, das aus der Gruppe ausgewählt ist, bestehend aus Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanatoethyl)fumarat, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendiisocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat, 4,4'-Diphenylmethandiisocyanat (MDI) und den Isomerengemischen davon, den teilweise oder vollständig hydrierten Cycloalkylderivaten von MDI, alkylsubstituierten Diphenylmethandiisocyanaten, 4,4'-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3'-Bis-chlormethylether-4,4'-diphenyldiisocyanat, schwefelhaltigen Diisocyanaten, Diisocyanaten von Dimerfettsäuren oder Gemischen aus zwei oder mehreren der vorgenannten Diisocyanate, vorzugsweise IPDI, TDI und MDI; und/oder
(iv) die Verbindung von Formel (Ib) aus der Gruppe ausgewählt ist, bestehend aus Hydroxyethylmethacrylat, Hydroxyethylacrylat, Hydroxypropylacrylat, Hydroxypropylmethacrylat, Hydroxybutylmethacrylat, Hydroxybutylacrylat, Acrylsäure und Methacrylsäure; und/oder,
(v) die Verbindung von Formel (IIb) aus der Gruppe ausgewählt ist, bestehend aus 3-Aminopropyltrimethoxysilan, 3-Aminopropyltriethoxysilan, 3-Aminopropylmethyldimethoxysilan, N-(2-Aminoethyl)-3-aminopropyltrimethoxysilan, 3-(Trimethoxysilyl)-n-(3-(trimethoxysilyl)propyl)-1-propanamin (CAS 82985-35-1), 3-Triethoxysilyl-N-(3-triethoxysilylpropyl)propan-1-amin (CAS 13497-18-2) und N-(Phenylamino)methyltrimethoxysilan; und/oder
(vi) die Umsetzung in der Gegenwart eines geeigneten Katalysators vorgenommen wird.

## Revendications

1. Polymère à double durcissement par rayonnement/humidité comprenant au moins un groupe terminal de la formule générale (I)
-A¹-C(=O)-CR¹=CH₂ (I),
dans lequel
A¹ est un groupe de liaison divalent contenant au moins un hétéroatome ; et
R¹ est choisi parmi H et alkyle en C₁ à C₄, de préférence H et méthyle ;
, dans lequel le polymère a un squelette polyoxyéthylène ou un squelette polyoxyéthylène-polyoxypropylène,
dans lequel A¹ est un groupe de formule (III)
-R¹¹-A¹¹-(R¹²-A¹²)ₙ-R¹³- (III)
dans lequel
R¹¹, R¹² et R¹³ sont indépendamment une liaison ou un résidu hydrocarbure substitué ou non substitué divalent avec 1 à 20 atomes de carbone, de préférence un résidu (cyclo)alkylène ou arylène substitué ou non substitué avec 1 à 14 atomes de carbone ;
A¹¹ et A¹² sont chacun indépendamment un groupe divalent choisi parmi - O-C(=O)-NH-, -NH-C(=O)O-, -NH-C(=O)-NH-, -NR"-C(=O)-NH-, -NH-C(=O)-NR"-, -NH-C(=O)-, -C(=O)-NH -, -C(=O)-O-, - O-C(=O)-, -O-C(=O)-O-, -S-C(=O)-NH-, - NH-C(=O)-S-, -C(=O)-S-, -S-C(=O)-, -S-C(=O)-S-, - C(=O)-, -S-, -O- et -NR"-, dans lequel R" peut être hydrogène ou un fragment hydrocarbure avec 1 à 12 atomes de carbone, facultativement substitué, de préférence alkyle en C₁ à C₂ ou hydrogène ;
et n vaut 0 ou 1,
dans lequel ledit polymère comprend au moins un groupe terminal de la formule générale (II)
-A²-SiXYZ (II),
dans lequel X, Y, Z sont, indépendamment les uns des autres, choisis dans le groupe constitué par un groupe hydroxyle et des groupes alkyle en C₁ à C₈, alcoxy en C₁ à C₈ et acyloxy en C₁ à C₈, dans lequel X, Y, Z sont des substituants directement liés à l'atome de Si ou deux des substituants X, Y, Z forment un cycle conjointement avec l'atome de Si auquel ils sont liés, et au moins l'un des substituants X, Y, Z est choisi dans le groupe constitué par un groupe hydroxyle, des groupes alcoxy en C₁ à C₈ et acyloxy en C₁ à C₈ ; et
A² est un groupe de liaison divalent contenant au moins un hétéroatome.

2. Polymère à double durcissement par rayonnement/humidité selon la revendication 1, dans lequel le polymère comprend au moins deux groupes terminaux de la formule générale (I).

3. Polymère à double durcissement par rayonnement/humidité selon l'une quelconque des revendications 1 ou 2, dans lequel A¹ et/ou A² comprennent un groupe éther, amide, carbamate, uréthane, urée, imino, siloxane, carboxylate, carbamoyle, amidino, carbonate, sulfonate ou sulfinate substitué ou non substitué, de préférence un groupe urée et/ou uréthane.

4. Polymère à double durcissement par rayonnement/humidité selon l'une quelconque des revendications 1 à 3, dans lequel
R¹¹ est une liaison ou un résidu hydrocarbure substitué ou non substitué divalent avec 1 à 20 atomes de carbone, de préférence un résidu alkylène non substitué avec 1 à 4 atomes de carbone ;
A¹¹ est un groupe divalent choisi parmi -O-C(=O)-NH-, -NH-C(=O)-NH-, et -NR"-C(=O)-NH-, de préférence -O-C(=O)-NH- ;
R¹³ est une liaison ou un résidu hydrocarbure substitué ou non substitué divalent avec 1 à 20 atomes de carbone, de préférence un résidu alkylène substitué ou non substitué avec 1 à 8 atomes de carbone ;
n vaut 0 ou 1, à condition que si n vaut 1,
R¹² soit un résidu hydrocarbure substitué ou non substitué divalent avec 1 à 20 atomes de carbone, de préférence un résidu (cyclo)alkylène ou résidu arylène substitué ou non substitué avec 1 à 14 atomes de carbone ; et
A¹² est un groupe divalent choisi parmi -NH-C(=O)O-, -NH-C(=O)-NH- et - NH-C(=O)-NR"-, de préférence -NH-C(=O)O.

5. Polymère à double durcissement par rayonnement/humidité selon l'une quelconque des revendications 2 à 4, dans lequel A² est un groupe de formule (IV)
-R²¹-A²¹-(R²²-A²²)ₘ-R²³- (IV)
dans lequel
R²¹, R²² et R²³ sont indépendamment une liaison ou un résidu hydrocarbure substitué ou non substitué divalent avec 1 à 20 atomes de carbone, de préférence un résidu (cyclo)alkylène ou arylène substitué ou non substitué avec 1 à 14 atomes de carbone ;
A²¹ et A²² sont chacun indépendamment un groupe divalent choisi parmi - O-C(=O)-NH-, -NH-C(=O)O-, -NH-C(=O)-NH-, -NR"-C(=O)-NH-, -NH-C(=O)-NR"-, -NH-C(=O)-, -C(=O)-NH -, -C(=O)-O-, - O-C(=O)-, -O-C(=O)-O-, -S-C(=O)-NH-, - NH-C(=O)-S-, -C(=O)-S-, -S-C(=O)-, -S-C(=O)-S-, - C(=O)-, -S-, -O- et -NR"-, dans lequel R" peut être hydrogène ou un fragment hydrocarbure avec 1 à 12 atomes de carbone, facultativement substitué, de préférence alkyle en C₁ à C₂ ou hydrogène ; et
m vaut 0 ou 1.

6. Polymère à double durcissement par rayonnement/humidité selon la revendication 5, dans lequel
R²¹ est une liaison ou un résidu hydrocarbure substitué ou non substitué divalent avec 1 à 20 atomes de carbone, de préférence un résidu alkylène non substitué avec 1 à 4 atomes de carbone ;
R²³ est une liaison ou un résidu hydrocarbure substitué ou non substitué divalent avec 1 à 20 atomes de carbone, de préférence un résidu alkylène non substitué avec 1 à 3 atomes de carbone ;
n vaut 0 ou 1, à condition que si n vaut 0,
A²¹ soit un groupe divalent choisi parmi -O-, -O-C(=O)-NH-, -NH-C(=O)-NH- et -NR"-C(=O)-NH-, de préférence -O-, -O-C(=O)-NH- ou NH-C(=O)-NH- ; et
à condition que si n vaut 1,
A²¹ soit un groupe divalent choisi parmi -O-, -O-C(=O)-NH-, -NH-C(=O)-NH- et -NR"-C(=O)-NH-, de préférence -O-C(=O)-NH ;
R²² soit un résidu hydrocarbure substitué ou non substitué divalent avec 1 à 20 atomes de carbone, de préférence un résidu (cyclo)alkylène ou résidu arylène substitué ou non substitué avec 1 à 14 atomes de carbone ; et
A²² soit un groupe divalent choisi parmi -NH-C(=O)O-, -NH-C(=O)-NH- et - NH-C(=O)-NR"-, de préférence -NH-C(=O)-NH.

7. Polymère à double durcissement par rayonnement/humidité selon l'une quelconque des revendications 1 à 6, dans lequel
(1) dans la formule (II), X, Y et Z sont, indépendamment les uns des autres, choisis parmi un groupe hydroxyle, méthyle, éthyle, méthoxy ou éthoxy, dans lequel au moins l'un des substituants est un groupe hydroxyle, ou un groupe méthoxy ou éthoxy, de préférence tous sont choisis parmi méthoxy ou éthoxy, plus préférablement méthoxy ; et/ou
(2) R¹¹, R²¹ et R²³ dans les formules générales (III) et/ou (IV) sont choisis parmi une liaison, un groupe méthylène, éthylène ou n-propylène.

8. Procédé permettant de produire un polymère à double durcissement par rayonnement/humidité selon l'une quelconque des revendications 1 à 7, comprenant la réaction d'un polymère à terminaison OH avec un composé de formule (la)
OCN-R¹³-C(=O)-C(R¹)=CH₂ (la)
et un composé de formule (IIa)
OCN-R²³-SiXYZ (IIa),
dans lequel
R¹³ est une liaison ou un résidu hydrocarbure substitué ou non substitué divalent avec 1 à 20 atomes de carbone, de préférence un résidu (cyclo)alkylène ou arylène substitué ou non substitué avec 1 à 14 atomes de carbone, et
R²³ est une liaison ou un résidu hydrocarbure substitué ou non substitué divalent avec 1 à 20 atomes de carbone, de préférence un résidu (cyclo)alkylène ou arylène substitué ou non substitué avec 1 à 14 atomes de carbone ;
dans lequel le squelette polymère est choisi dans le groupe constitué par polyoxyalkylènes, poly(méth)acrylates, polyesters, et combinaisons de ceux-ci.

9. Procédé selon la revendication 8, dans lequel
(i) le rapport molaire des groupes OH terminaux du polymère et des groupes NCO va de 1:0,5 à 1:1,5, de préférence 1:0,9 à 1:1,1, plus préférablement 1:0,99 à 1:1,01 ; et/ou
(ii) la réaction est effectuée en présence d'un catalyseur approprié.

10. Procédé permettant de produire un polymère à double durcissement par rayonnement/humidité selon l'une quelconque des revendications 1 à 7, comprenant
(a) la réaction d'un polymère à terminaison OH avec un polyisocyanate de formule (V)
(OCN)ₚ-R²-NCO (V)
dans lequel R² est un résidu hydrocarbure substitué ou non substitué avec 1 à 20 atomes de carbone, de préférence un résidu (cyclo)alkylène ou arylène substitué ou non substitué avec 1 à 14 atomes de carbone ;
p va de 1 à 3, de préférence vaut 1 ou 2, plus préférablement 1 ; et
(b) réaction du polymère à terminaison NCO résultant avec un composé de formule (Ib)
B¹-R¹³-C(=O)-CR¹=CH₂ (Ib)
dans lequel B¹ est un groupe réactif avec NCO, de préférence -OH.
et un composé de formule (IIb)
B²-R²³-SiXYZ (IIb).
dans lequel B² est un groupe réactif avec NCO, de préférence -N(R")₂, dans lequel R" peut être hydrogène ou un fragment hydrocarbure avec 1 à 12 atomes de carbone, facultativement substitué, de préférence alkyle en C₁ à C₂ ou hydrogène, plus préférablement hydrogène ;
dans lequel R¹³ est un résidu hydrocarbure substitué ou non substitué divalent avec 1 à 20 atomes de carbone, de préférence un résidu (cyclo)alkylène ou arylène substitué ou non substitué avec 1 à 14 atomes de carbone, et R²³ est une liaison ou un résidu hydrocarbure substitué ou non substitué divalent avec 1 à 20 atomes de carbone, de préférence un résidu (cyclo)alkylène ou arylène substitué ou non substitué avec 1 à 14 atomes de carbone ;
dans lequel le squelette polymère est choisi dans le groupe constitué par polyoxyalkylènes, poly(méth)acrylates, polyesters, et combinaisons de ceux-ci

11. Procédé selon la revendication 10, dans lequel
(i) le rapport molaire des groupes OH terminaux au polyisocyanate de formule (V) va de 1:0,5 à 1:1,5, de préférence 1:0,9 à 1:1,1, plus préférablement 1:0,99 à 1:1,01 ; et/ou
(ii) le rapport molaire des groupes NCO n'ayant pas réagi après l'étape (a) à la somme des groupes B¹ et B² va de 1:0,5 à 1:1,5, de préférence 1:0,9 à 1:1,0, plus préférablement 1:0,94 à 1:0,96 ; et/ou
(iii) le polyisocyanate de formule (V) est un diisocyanate choisi dans le groupe constitué par diisocyanate d'éthylène, diisocyanate de 1,4-tétraméthylène, diisocyanate de 1,4-tétraméthoxybutane, diisocyanate de 1,6-hexaméthylène (HDI), 1,3-diisocyanate de cyclobutane, 1,3- et 1,4-diisocyanate de cyclohexane, bis(2-isocyanatoéthyle)fumarate, 1-isocyanato- 3,3,5-triméthyl-5-isocyanatométhylcyclohexane (diisocyanate d'isophorone, IPDI), diisocyanate de 2,4- et 2,6-hexahydrotoluylène, diisocyanate d'hexahydro-1,3- ou -1,4-phénylène, diisocyanate de benzidine, naphtalène-1,5-diisocyanate, 1,6-diisocyanato-2,2,4-triméthylhexane, 1,6-diisocyanato-2,4,4-triméthylhexane, diisocyanate de xylylène (XDI), diisocyanate de tétraméthylxylylène (TMXDI), diisocyanate de 1,3- et 1,4-phénylène, diisocyanate de 2,4- ou 2,6-toluylène (TDI), diisocyanate de 2,4'-diphénylméthane, diisocyanate de 2,2'-diphénylméthane, diisocyanate de 4,4'-diphénylméthane (MDI), et les mélanges isomères de ceux-ci, les dérivés cycloalkyle partiellement ou complètement hydrogénés de MDI, diisocyanates de diphénylméthane à substitution alkyle, 4,4'-diisocyanatophénylperfluoréthane, ester bis-isocyanatoéthylique d'acide phtalique, 2,4- ou 2,6-diisocyanate de 1-chlorométhylphényle, 2,4- ou 2,6-diisocyanate de 1-bromométhylphényle, diisocyanate de 3,3'-bis-chlorométhyl-éther-4,4'-diphényle, diisocyanates contenant du soufre, diisocyanates d'acides gras dimères, ou mélanges de deux des diisocyanates susmentionnés ou plus, de préférence IPDI, TDI et MDI ; et/ou
(iv) le composé de formule (Ib) est choisi dans le groupe constitué par hydroxyéthylméthacrylate, hydroxyéthylacrylate, hydroxypropylacrylate, hydroxypropylméthacrylate, hydroxybutylméthacrylate, hydroxybuylacrylate, acide acrylique et acide méthacrylique ; et/ou,
(v) le composé de formule (IIb) est choisi dans le groupe constitué par 3-aminopropyltriméthoxysilane, 3-aminopropyltriéthoxysilane, 3-aminopropylméthyldiméthoxysilane, N-(2-aminoéthyl)-3-aminopropyltriméthoxysilane, 3-(triméthoxysilyl)-n-(3-(triméthoxysilyl)propyl)-1-propanamine (CAS 82985-35-1), 3-triéthoxysilyl-N-(3-triéthoxysilylpropyl)propan-1-amine (CAS 13497-18-2), et N-(phénylamino)méthyltriméthoxysilane ; et/ou
(vi) la réaction est effectuée en présence d'un catalyseur approprié.
